# EUROPEAN PATENT SPECIFICATION

(11) **EP 0 611 104 B1**
(45) Date of publication and mention of the grant of the patent: **06.10.1999**
(21) Application number: 94300808.6
(22) Date of filing: 03.02.1994
(51) Int. Cl.: F16L 11/133, F16L 11/08

(54) **Leakage-detecting hoses**
Schlauch mit Lecknachweis
Tuyau avec détection d'une fuite

(30) Priority: 09.02.1993 JP 4462293
(43) Date of publication of application: 17.08.1994
(73) Proprietor: BRIDGESTONE CORPORATION, Tokyo 104-0031 (JP)
(72) Inventor: Fujisawa, Masao, Chigasaki City, Kanagawa Pref. (JP)
(74) Representative: Whalley, Kevin

(56) References cited:
- EP-A- 0 143 247
- WO-A-92/00481
- GB-A- 1 253 545
- GB-A- 1 587 243
- GB-A- 2 027 838
- US-A- 4 023 834
- US-A- 4 110 061
- US-A- 4 157 101
- DATABASE WPI Section Ch, Week 8345, Derwent Publications Ltd., London, GB; Class A81, AN 83-812069 & JP-A-58 167 668 (NITTO ELECTRIC IND KK) 3 October 1983

## Description

This invention relates to a leakage-detecting hose for fluid transportation, and more particularly to a structure of a hose capable of exactly detecting leakage of transporting fluid under a simple structure without causing leakage from the inside of the hose toward the outside thereof.

In petroleum shipping and discharging, petroleum is transported from a tanker floating on the sea to a petroleum tank disposed on the land through a hose connecting them to each other. However, if any problem arises during the transportation, there may be caused an accident wherein the hose is cracked to allow petroleum to flow from the inside of the hose into the sea. In this case, the ecosystem is broken down in the vicinity of the petroleum floating area on the sea to bring about a serious influence on fish, sea birds and the like.

To this end, it is attempted to take various countermeasures for preventing the leakage of fluid such as petroleum from the hose or further visually detecting an abnormal state of the hose from the exterior in order to prevent a significant accident from occurring.

As a countermeasure for preventing the leakage of the fluid, there known is a method of arranging a secondary reinforcing layer on an outer periphery of a hose body to prevent the diffusion of fluid leaked from cracked portions of the hose toward the outside of the hose. As countermeasures for detecting the leakage of the fluid from the hose body, there are known a first method in which the secondary reinforcing layer is previously disposed at a slackened state in an axial direction of the hose body and then expansion of the secondary reinforcing layer in the peripheral direction thereof by stretching the slackened state through pressure of the fluid leaked from the hose body is visually detected from the exterior, and a second method in which a mechanical type or electrical type fluid detecting mechanism is arranged in the vicinity of an end of a hose and detects fluid leaked from the hose body and guided to the end of the hose while retained inside the secondary reinforcing layer.

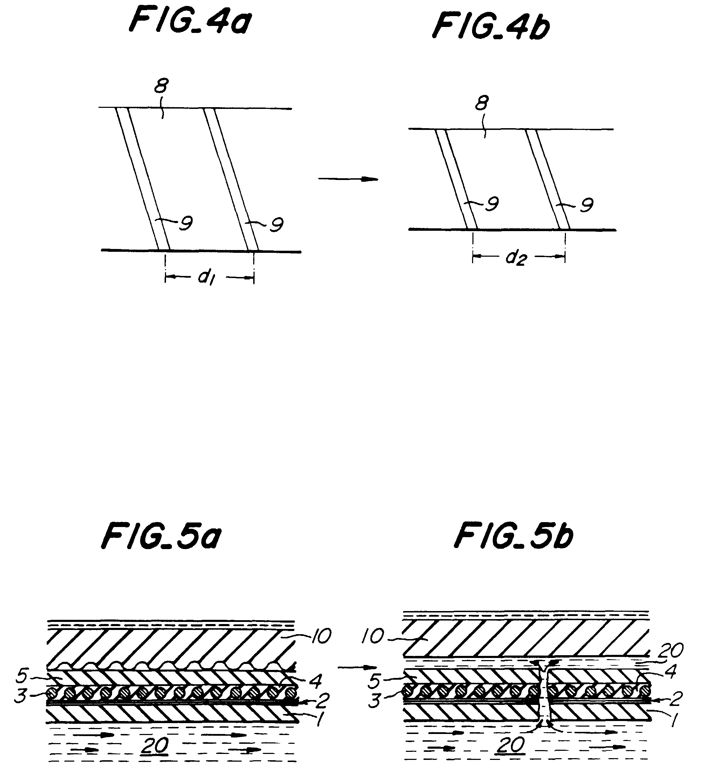

A hose having a structure as shown in Fig. 5a of the accompanying drawings is used in the first detecting method. That is, such a hose comprises a hose body comprised of an inner rubber layer 1, a primary reinforcing layer 2 of at least two cord plies, reinforcing wires 3 embedded in rubber 4, an outer rubber layer 5, and a secondary reinforcing layer 10 disposed on an outer periphery of the hose body wherein an inner surface of the layer 10 facing the outer rubber layer 5 is slackened.

When cracks or the like arise in the hose body due to some cause, fluid 20 flows into a space between the hose body and the secondary reinforcing layer 10 to expand the secondary reinforcing layer 10 in the peripheral direction thereof as shown in Fig. 5b, which is visually observed. In the manufacture of the illustrated hose, however, it is required to dispose the secondary reinforcing layer 10 on the hose body at a slackened state, and as a result there occur serious problems that it is difficult to continuously shape the hose and a long time is taken in the manufacture of the hose.

In general, the hose is designed so as to expand by about 30% in the peripheral direction of the hose when the fluid 20 leaks between the hose body and the secondary reinforcing layer 10. However, about 70-80% of the hose floating on the sea usually sinks in the sea, and the area of the hose exposed on the sea becomes naturally small, so that even when the outer diameter of the hose is expanded by about 30% due to the leakage of the fluid, it is very difficult to visually detect such an expanding phenomenon. Such detection becomes particularly difficult when the sea is rough.

Moreover, the secondary reinforcing layer 10 is usually designed to withstand a pressure corresponding to at least twice a service designed pressure of the hose body for safely retaining the fluid leaked from the hose body inside the secondary reinforcing layer. On the other hand, the hose is designed so that its outer diameter may expand by 20-30% as an abnormal detecting mechanism, so that the diameter of the hose withstanding the pressure becomes large and hence it is required to increase the number of the reinforcing layers used for obtaining the given pressure resistance, which undesirably increases the cost in the manufacture of the hose.

In the second detecting method, when a mechanical type detecting mechanism is arranged in the vicinity of the connected end of the hose, in order to confirm the occurrence of an accident, it is required to visually investigate the detecting mechanism by rowing a boat close to the hose end or by inspection by a diver. As a result, the maintenance and investigation of the mechanical type detecting mechanism undesirably involved a great amount of labour and a higher cost.

On the other hand, when an electrical type detecting mechanism is arranged in the vicinity of the hose end, it is required to use a closed vessel enduring sea conditions and a power source for detecting the leakage of the fluid. As a result, a great amount of initial cost is required and there is still a problem in the reliability over a long period.

It is, therefore, an aim of the present invention to overcome the aforementioned problems of the conventional techniques and to provide a hose structure capable of safely retaining fluid leaked from the hose body by means of the secondary reinforcing layer and at the same time easily detecting the occurrence of accidental damage.

Attention is also drawn to the disclosures of US-A-4465105 and GB-A-1503502.

According to the present invention, there is provided a leakage-detecting hose for the transportation of a fluid, comprising a hose body which includes an inner rubber layer, a primary reinforcing layer, and an outer rubber layer, the hose further comprising an outermost rubber layer, and a buoyancy member between the outer rubber layer and the outermost rubber layer, characterized in that a secondary reinforcing layer is arranged so as to divide the buoyancy member into two layers and comprised of at least two cord plies, the cords of which plies having a cord angle larger than the angle of repose 54°44' with respect to a longitudinal direction of the hose and being crossed with each other in an axial direction of the hose.

In a preferred embodiment of the invention, a visible colour tape is wound around the surface of the outermost rubber layer in the hose.

It is well-known that when the cords of the cord layers are embedded in a cylinder of a rubbery elastomer at a certain cord angle with respect to the longitudinal direction of the cylinder, if a pressure is applied to the inside of the cylinder, the diameter of the cylinder becomes large and the length thereof becomes short, or the diameter of the cylinder becomes small and the length thereof becomes long until the cord angle becomes a constant angle with respect to the longitudinal direction of the cylinder.

Such a constant angle is called the angle of repose and is 54°44'.

Therefore, when the cords of the cord layers in the hose are crossed with each other at a cord angle larger than the angle of repose with respect to the longitudinal direction of the hose, if a pressure is applied so as to render such a cord angle into the angle of repose, the hose diameter is reduced and the hose length is prolonged. On the other hand, when the cords of the cord layers in the hose are crossed with each other at an angle smaller than the angle of repose with respect to the longitudinal direction of the hose, if a pressure is applied so as to render such a cord angle into the angle of repose, the hose diameter is enlarged and the hose length is shortened.

The invention provides a leakage-detecting hose for the transportation of fluids by adopting the above fact in particular portions of the hose.

That is, when a given internal pressure is applied to the secondary reinforcing layer of at least two cord plies having a cord angle larger than the angle of repose (by leakage of fluid from the hose body), the change of the cord angle toward the angle of repose occurs. As a result, the diameter of the secondary reinforcing layer is reduced and at the same time this layer is stretched in the axial direction of the hose. In other words, when fluid leaks out from the hose body at a particular region, the outer diameter becomes small and the length becomes long as compared with the other regions of the hose. Thus, the reduction of the outer diameter at the particular region of the hose lowers the buoyancy per unit length and hence the draft line thereof becomes deeper as compared with that of the other normal region in the hose and also the length becomes longer than that of the other normal region, so that the occurrence of such an accidental damage in the hose can easily be confirmed visually.

The invention will be further described with reference to the accompanying drawings, wherein:
Fig. 1 is a partially sectional view of a hose according to the invention;
Fig. 2 is a partially plan view illustrating the winding state of a secondary reinforcing layer used in the hose of the invention;
Fig. 3 is a view illustrating a change of cord angle in cords constituting the secondary reinforcing layer;
Figs. 4a and 4b are schematic and partially plan views showing a change of a hose provided on the outermost rubber layer with a rubber tape having a visible colour, according to the invention,before and after the occurrence of the leakage of fluid, respectively; and
Figs. 5a and 5b are partially sectional views of a conventional leakage-detecting hose before and after the occurrence of leakage of fluid, respectively.

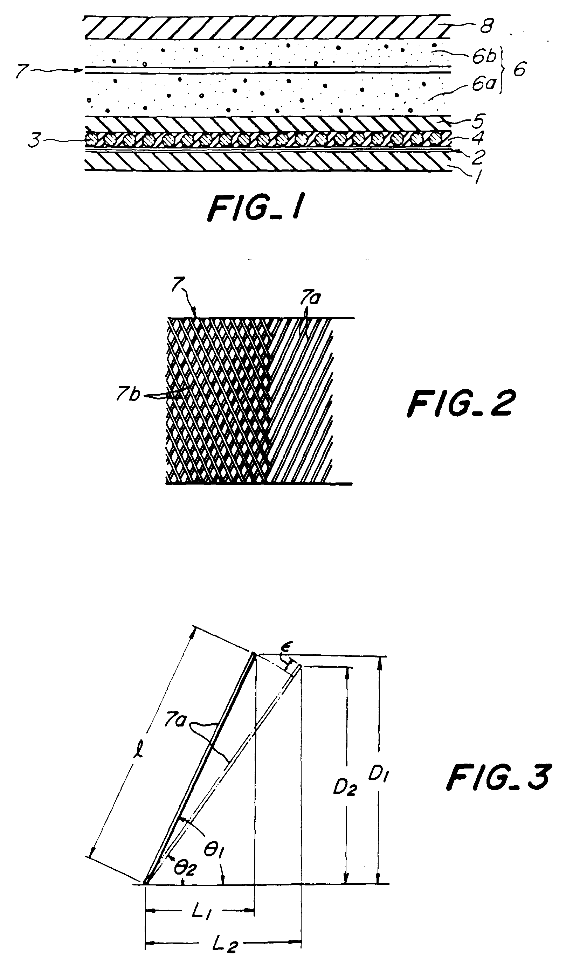

In Fig. 1 is diagrammatically shown a main portion of a hose according to the invention. Numeral 1 is an inner rubber layer, which is usually made from nitrile rubber or the like for ensuring resistance to oils. Numeral 2 is a primary reinforcing layer of at least two cord plies wound around the inner rubber layer 1 and made from synthetic fiber cords. Numeral 3 is a reinforcing wire wound around the primary reinforcing layer 2 for giving a strength enduring a given internal pressure to the hose, which is embedded in rubber 4. Numeral 5 is an outer rubber layer covering the layer of the reinforcing wires 3. Moreover, the reinforcing wire 3 may be omitted in accordance with the use purpose of the hose.

A hose body is comprised of the members 1-5 and covered with a sponge member 6 having closed cells as a buoyancy member. Further, the sponge member 6 is covered with an outermost rubber layer 8.

In the invention, the sponge member 6 is divided into two layers 6a and 6b by a secondary reinforcing layer 7. As shown in Fig. 2, the secondary reinforcing layer 7 is comprised of two cord plies each containing cords (7a, 7b) arranged at a cord angle (θ) larger than so-called angle of repose (54°44') with respect to the longitudinal direction of the hose, the cords of which plies being crossed with each other in the axial direction of the hose. The cord angle (θ) is preferably within a range of not less than 55° but less than 90°, more preferably 60-80°.

Moreover, each of the cord plies constituting the secondary reinforcing layer 7 is usually formed by coating synthetic fiber cords such as nylon cords, polyester cords, aramide cords or the like arranged at a given cord angle with rubber. The number of the cord plies constituting the secondary reinforcing layer 7 is naturally determined in accordance with the size of the hose so as to safely retain fluid leaked from the hose body inside the secondary reinforcing layer 7 and is at least two cord plies.

Moreover, the cords constituting the secondary reinforcing layer 7 have a certain elongation at rupture naturally determined in accordance with the cord material to be used. When a pressure is applied to the secondary reinforcing layer 7 to dispose the cord angle of this layer 7 close to the angle of repose, even if the cords are elongated to an extent not exceeding the above elongation at rupture, the hose tends to reduce the hose diameter and prolong the hose length. If the elongation at rupture of the cord exceeds the upper limit to cause breakage of the cord, the secondary reinforcing layer 7 is also broken and hence the leakage of fluid from the hose body is not longer prevented.

In the illustrated embodiment, if fluid is leaked out from the hose body toward the divided sponge layer 6a due to some cause, the cords of the secondary reinforcing layer 7 are deformed to dispose the cord angle close to the angle of repose (54°44') as shown in Fig. 3. For example, when the cords 7a of the secondary reinforcing layer 7 have a cord angle θ₁ with respect to the longitudinal direction of the hose and the angle of repose is θ₂ (= 54°44'), the cord angle of the cord 7a changes from θ₁ to θ₂ due to the leakage of the fluid.

As a result, the change of the hose in the longitudinal direction thereof is L₂/L₁ = (ℓ+ε) cos θ₂/ℓ cos θ₁ =(ℓ+ε) cos 55°44'/ℓ cos θ₁ = 0.557 (ℓ+ε)/ℓ cos θ₁. On the other hand, the change of the hose diameter is D₂/D₁ = (ℓ+ε) sin θ₂/ℓ sin θ₁ = (ℓ+ε) sin 55°44'/ℓ sin θ₁ = 0.816 (ℓ+ε)/ℓ sin θ₁. Moreover, ℓ is an initial length of the cord and ε is an elongated portion of the cord.

In this case, if θ₁ is 65°, the length of the hose increases by 37%, while the diameter of the hose decreases by 10%.

According to the hose of the aforementioned structure, when fluid is leaked out from the hose body at a particular region, the outer diameter becomes small and the length becomes long as compared with the other regions of the hose, so that the reduction of the outer diameter at the particular region of the hose lowers the buoyancy per unit length and hence the draft line thereof becomes deeper as compared with that of the other normal region in the hose and also the length becomes longer than that of the other normal region, and consequently the occurrence of such an accidental damage in the hose can easily be confirmed visually.

As shown in Fig. 4a, a rubber tape 9 having a visible colour may be wound around the outermost rubber layer 8 of the hose according to the invention. In this case, if fluid is leaked out from the hose body at a particular region thereof, the length of this region becomes long as previously mentioned and hence the distance between adjacent wound tape portions is widened (d₂ > d₁) as shown in Fig. 4b, so that the visual detection of the accidental damage in the hose can be facilitated.

As seen from the above, the invention has considerable advantages as mentioned below:
(1) The formation of the secondary reinforcing layer can be carried out in the same manner as in the usual formation of the reinforcing layer by merely changing the cord angle of the cord ply, so that continuous formation is possible and also the formation steps can largely be reduced as compared with those in the conventional technique.
(2) The visual detecting ability can be considerably enhanced by changes of outer diameter and length in the hose and the draft line and the like as compared with the conventional detecting mechanism.
(3) Since no mechanical or electrical detecting mechanism is required in the end portion of the hose, the reliability over a long time can considerably be improved.

## Claims

1. A leakage-detecting hose for the transportation of a fluid, comprising a hose body (1 - 5) which includes an inner rubber layer (1) a primary reinforcing layer (2), and an outer rubber layer (5), the hose further comprising an outermost rubber layer (8), and a buoyancy member (6) between the outer rubber layer (5) and the outermost rubber layer (8), characterized in that a secondary reinforcing layer (7) is arranged so as to divide the buoyancy member (6) into two layers (6a, 6b) and comprised of at least two cord plies, the cords (7a, 7b) of which plies having a cord angle (θ) larger than the angle of repose 54°44' with respect to a longitudinal direction of the hose and being crossed with each other in an axial direction of the hose.

2. A leakage-detecting hose as claimed in claim 1, characterized in that a visible colour tape (9) is wound around the surface of the outermost rubber layer (8) in the hose.

3. A leakage-detecting hose as claimed in claim 1 or 2, characterized in that the cord angle (θ) in the secondary reinforcing layer (7) is within a range of not less than 55° but less than 90° with respect to the longitudinal direction of the hose.

4. A leakage-detecting hose as claimed in claim 3, characterized in that the said cord angle (θ) is in a range of 60 - 80°.

## Patentansprüche

1. Leckanzeigeschlauch für die Beförderung eines Fluids, aufweisend einen Schlauchkörper (1-5), der eine innere Gummischicht (1), eine primäre Verstärkungsschicht (2), und eine äußere Gummischicht (5) aufweist, wobei der Schlauch weiterhin eine äußerste Gummischicht (8), und zwischen der äußeren Gummischicht (5) und der äußersten Gummischicht (8) ein Auftriebelement (6) aufweist, dadurch gekennzeichnet, daß eine sekundäre Verstärkungsschicht (7) so angeordnet ist, daß sie das Auftriebelement (6) in zwei Schichten (6a, 6b) teilt, und aus mindestens zwei Cordlagen besteht, wobei die Cordfäden (7a, 7b) dieser Lagen einen Cordfadenwinkel (θ) haben, der größer als der Ruhewinkel 54°44' bezüglich der Längsrichtung des Schlauchs ist, und sich in der axialen Richtung des Schlauchs überkreuzen.

2. Leckanzeigeschlauch wie in Anspruch 1 beansprucht, dadurch gekennzeichnet, daß bei dem Schlauch ein sichtbares Farbband (9) um die Oberfläche der äußersten Gummischicht (8) gewickelt ist.

3. Leckanzeigeschlauch wie in Anspruch 1 oder 2 beansprucht, dadurch gekennzeichnet, daß der Cordfadenwinkel (θ) bei der sekundären Verstärkungsschicht (7) innerhalb eines Bereichs von nicht weniger als 55°, aber weniger als 90° bezüglich der Längsrichtung des Schlauchs liegt.

4. Leckanzeigeschlauch wie in Anspruch 3 beansprucht, dadurch gekennzeichnet, daß der Cordfadenwinkel (θ) in dem Bereich von 60-80° liegt.

## Revendications

1. Tuyau de détection de fuites pour le transport d'un fluide, comprenant un corps de tuyau (1-5), englobant une couche de caoutchouc interne (1), une couche de renforcement primaire (2) et une couche de caoutchouc externe (5), le tuyau comprenant en outre une couche de caoutchouc la plus externe (8) et un élément flottant (6) entre la couche de caoutchouc externe (5) et la couche de caoutchouc la plus externe (8), caractérisé en ce qu'une couche de renforcement secondaire (7) est agencée de sorte à diviser l'élément flottant (6) en deux couches (6a, 6b) et composée d'au moins deux couches de câblés, les câblés (7a, 7b) de ces nappes formant un angle de câblé (θ) supérieur à l'angle de repos de 55°44' par rapport à une direction longitudinale du tuyau et se croisant dans une direction axiale du tuyau.

2. Tuyau de détection de fuites selon la revendication 1, caractérisé en ce qu'une bande de couleur visible (9) est enroulée autour de la surface de la couche de caoutchouc la plus externe (8) dans le tuyau.

3. Tuyau de détection de fuites selon les revendications 1 ou 2, caractérisé en ce que l'angle de câblé (θ) dans la couche de renforcement secondaire (7) est compris dans un intervalle non inférieur à 55° mais inférieur à 90° par rapport à la direction longitudinale du tuyau.

4. Tuyau de détection de fuites selon la revendication 3, caractérisé en ce que ledit angle de câblé (θ) est compris dans l'intervalle allant de 60° à 80°.
